# EUROPÄISCHE PATENTANMELDUNG

(11) **EP 1 614 399 A2**
(43) Veröffentlichungstag der Anmeldung: **11.01.2006**
(21) Anmeldenummer: 05013980.7
(22) Anmeldetag: 28.06.2005
(51) Int. Cl.: A61C 17/34, F16H 21/44

(54) **Hubübersetzungsgetriebe und elektrische Zahnbürste mit einem solchen Getriebe**

(30) Priorität: 09.07.2004 DE 102004033538
(71) Anmelder: GIMELLI PRODUKTIONS AG, CH-3052 Zollikofen (CH)
(72) Erfinder: Schütz, Alfred, 3052 Zollikofen (CH)
(74) Vertreter: Hebing, Norbert

(57) **Zusammenfassung**

Elektrische Zahnbürsten bestehen aus einem einen Bürstenkopf aufweisenden auswechselbaren Kopfteil (20) und einem mit einem Antriebsmotor für die Bürste versehenen Handteil. Beim Aufstecken eines Kopfteiles (20) auf das Handteil wird ein aus dem Handteil herausragender, eine axiale Hubbewegung ausführender Antriebszapfen mit dem Bürstenkopf gekoppelt.

Ein Getriebe im Kopfteil überträgt die Hubbewegung des Antriebszapfens z. B. in eine Hubbewegung des Bürstenkopfes, dem eine seitliche Kippbewegung überlagert ist. Allerdings ist der Hub des Antriebszapfens, der von einigen Handteilen zur Verfügung gestellt wird, dem gewünschten Hub des Bürstenkopfes nicht angepasst.

Es wird daher vorgeschlagen, im Kopfteil (20) in der Wirkverbindung zwischen dem Antriebszapfen und dem Bürstenkopf ein Hubübersetzungsgetriebe (2, 3, 4) anzuordnen, dessen Antriebsstange (2) mit dem Antriebszapfen gekoppelt ist, und das Hubübersetzungsgetriebe insbesondere so einzurichten ist, dass eine Hubuntersetzung erfolgt.

Auf diese Weise kann der vom Antriebszapfen gelieferte Hub in einen für den Bürstenkopf angepassten Hub übersetzt werden.

Die Erfindung bezieht sich auch auf die Ausgestaltung des Hubübersetzungsgetriebes (2, 3, 4).

## Beschreibung

Die Erfindung bezieht sich auf ein Hubübersetzungsgetriebe, insbesondere für eine elektrische Zahnbürste, um eine oszillierende Hubbewegung einer Antriebsstange in eine oszillierende amplitudengeänderte Hubbewegung einer Abtriebsstange zu übersetzen, wobei zwischen den beiden Stangen ein um ein Schwenklager schwenkbarer Übertragungshebel angeordnet ist, an dem die beiden Stangen in unterschiedlichen Abständen zum Schwenklager angelenkt sind.

Bei derartigen Getrieben besteht das Problem darin, diese mit möglichst wenig Gelenken zu realisieren, um eine möglichst geringe Störanfälligkeit zu erhalten. Des Weiteren sollen sie möglichst einfach herstellbar sein, damit sie sich für eine Massenproduktion eignen.

Zur Lösung des Problems sieht die Erfindung vor, dass die Antriebsstange mittels eines Scharniers mit dem einen vom Schwenklager entfernten Ende des Übertragungshebels verbunden ist und dass das andere Ende des Übertragungshebels verschiebbar im Schwenklager gehalten ist.

Bei einer solchen Lösung kann zumindest eine der Stangen unmittelbar mit dem Übertragungshebel gelenkig verbunden sein, da die verschiebbare Anordnung des Übertragungshebels sein Ausweichen gestattet, wenn ihm durch den Hub der Antriebsstange zusätzlich zur Schwenkbewegung eine Längsbewegung aufgeprägt wird.

Insbesondere kann die Antriebsstange an ihrem vorderen Ende einen seitlich abgesetzten Fortsatz aufweisen, an dem der Übertragungshebel in einem Scharnier schwenkbar befestigt ist. Dies ermöglicht darüber hinaus eine Anordnung auf kleinstem Raum, da der Übertragungshebel in etwa senkrecht zur Antriebsstange ausgerichtet sein kann und dadurch bei seiner Schwenkbewegung über den Fortsatz klappen kann.

Die verschiebbare Lagerung des Übertragungshebels kann relativ einfach dadurch realisiert werden, indem das andere Ende des Übertragungshebels einen Schlitz aufweist, durch den ein ortsfest zum Getriebe angeordneter, die Schwenkachse des Übertragungshebels bildender Stift hindurchragt. Bei dieser Anordnung ist somit das Ende des Übertragungshebels als Gabel ausgeführt, die den Stift umfasst, so dass der Übertragungshebel während seiner Schwenkbewegung gleichzeitig eine Längsbewegung ausüben kann.

Die Abtriebsstange befindet sich wie die Antriebsstange in einer ortsfesten Führung, die lediglich eine Längsbewegung, nicht aber eine Querbewegung erlaubt. Daher muss eine mit der Abtriebsstange verbundene Übertragungsstange mittels eines Scharniers am Übertragungshebel angelenkt sein, die entsprechend der Auf- und Abbewegung des Übertragungshebels eine Schwenkbewegung durchführt.

Um die Abtriebsstange in eine oszillierende Drehbewegung um ihre Längsachse versetzen zu können, sieht die Erfindung vor, dass die Übertragungsstange mit der Abtriebsstange mittels eines Kugelgelenks verbunden ist, und die Abtriebsstange in eine schräg zur Längsachse der Abtriebsstange verlaufende Kulisse geführt ist.

Solange die Belastung des Getriebes nicht zu hoch ist, wie dies zum Beispiel bei einer elektrischen Zahnbürste der Fall ist, kann wenigstens der Übertragungshebel, der Fortsatz und die Übertragungsstange aus einem Kunststoff gefertigt und die Scharniere als Filmscharniere ausgebildet sein.

Die Erfindung bezieht sich weiterhin auf eine elektrische Zahnbürste mit einem einen Antrieb aufweisenden Handteil, an dessen Aufsteckende ein wenigstens eine axiale Hubbewegung ausführender Antriebszapfen herausragt und einem auf das Aufsteckende des Handteils aufsteckbaren Kopfteil, in dem ein Borstenbüschel tragender Bürstenkopf so gelagert ist, dass er wenigstens eine in Längsrichtung des Kopfteils hin- und hergehende Hubbewegung auszuführen vermag, wozu der Bürstenkopf mit dem Antriebszapfen gekoppelt ist, wenn das Kopfteil auf dem Handteil aufgesteckt ist.

Das Problem dabei ist, dass übliche Antriebe, mit denen z. B. eine drehende Bewegung des Bürstenkopfes um seine Hochachse erzeugt werden soll, einen relativ großen Hub des Antriebszapfens benötigen. Ein solches Handteil könnte somit nicht ohne weiteres mit einem Kopfteil kombiniert werden, dessen Bürstenkopf nur eine kleine Hubbewegung ausführen soll. Zwar könnte daran gedacht werden, für ein solches Kopfteil ein gesondertes Handteil vorzusehen, was aber den Nachteil hätte, dass der Benutzer mehrere Handteile benötigen würde, wenn er verschiedene Bürstenköpfe zum Reinigen seiner Zähne benutzen möchte.

Zur Lösung dieses Problems sieht die Erfindung vor, dass im Kopfteil in der Wirkverbindung zwischen dem Antriebszapfen und dem Bürstenkopf ein Hubübersetzungsgetriebe angeordnet ist, dessen Antriebsstange mit dem Antriebszapfen gekoppelt ist, und dass das Hubübersetzungsgetriebe insbesondere so eingerichtet ist, dass eine Hubuntersetzung erfolgt.

Diese Lösung hat darüber hinaus den Vorteil, dass das Kopfteil mit einem hin- und hergehenden Bürstenkopf an bestehende Handteile mit vorgegebenem Hub der Antriebszapfen angepasst werden kann, indem lediglich das Über- bzw. Untersetzungsverhältnis des Hubübersetzungsgetriebes angepasst wird, was mit geringen konstruktiven Maßnahmen möglich ist.

Prinzipiell kann das Hubübersetzungsgetriebe auch in einem Adapter ausgebildet sein, der zunächst auf das Handteil aufgesteckt wird.

Derartige Zahnbürsten sind häufig mit einem auswechselbaren Kopfteil versehen, um aus hygienischen Gründen den Zahnbürstenkopf von Zeit zu Zeit auswechseln zu können. Die Erfindung sieht daher vor, dass die Zahnbürste aus einem Handteil und einem Kopfteil besteht, wobei im Handteil ein elektrischer Antrieb für die Antriebsstange vorgesehen ist, und dass das Getriebe im Kopfteil untergebracht und gehalten ist. Demnach ist das oben beschriebene Getriebe integraler Bestandteil des Kopfteiles und wird mit diesem ersetzt. Schon aus diesem Grund muss alles relativ einfach aufgebaut und kostengünstig herstellbar sein. Andererseits sind die Anforderungen an die Dauerbelastbarkeit des Getriebes nicht sehr hoch, da davon ausgegangen wird, dass das Kopfteil nach ca. 500 bis 1000 Zahnputzvorgängen ausgetauscht werden sollte.

Im Folgenden soll anhand eines Ausführungsbeispieles die Erfindung näher erläutert werden. Dazu zeigen:
- Fig.1: eine Seitenansicht des erfindungsgemäßen Getriebes,
- Fig.2: eine Explosionsdarstellung des Kopfteiles einer elektrischen Zahnbürste,
- Fig.3: einen Längsschnitt durch dieses Kopfteil,

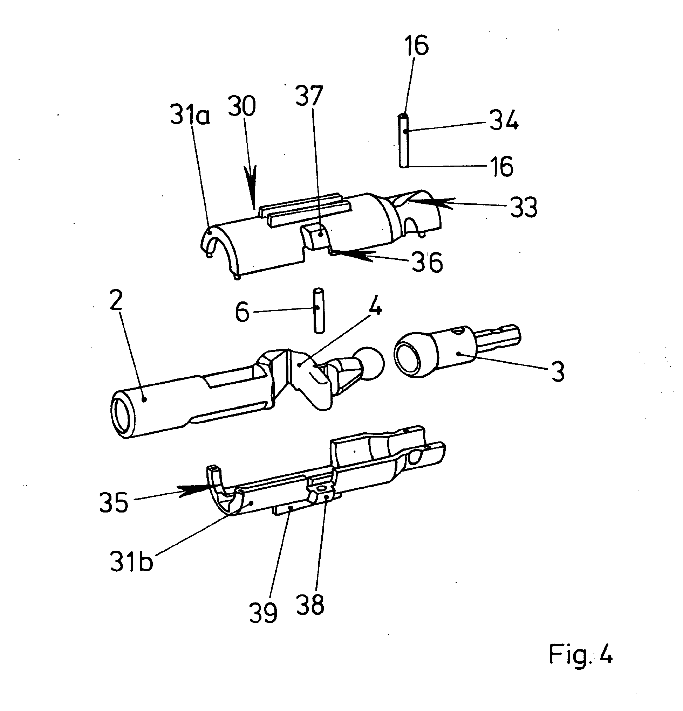

- Fig.4: eine Explosionsdarstellung des Getriebes in einem aus zwei Halbschalen bestehenden Zylinder.

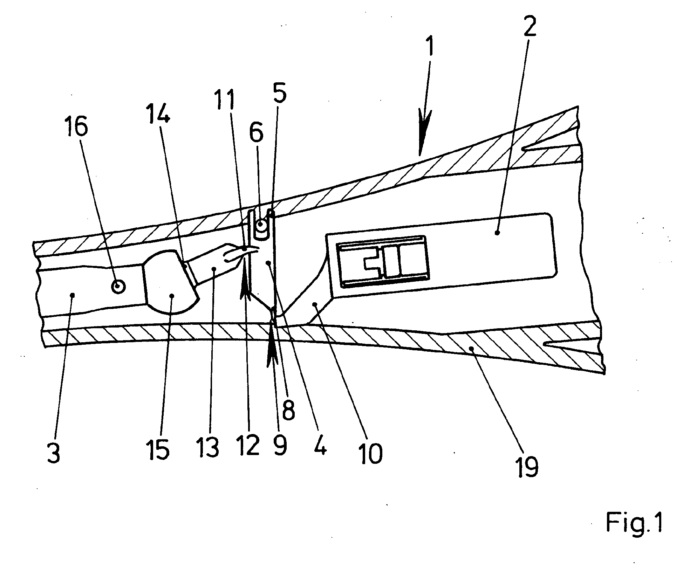

Es wird zunächst auf die Figur 1 Bezug genommen. Es zeigt das erfindungsgemäße Getriebe 1. In koaxialer Ausrichtung sind eine Antriebsstange 2 und eine Abtriebsstange 3 in einem Gehäuse 19 angeordnet, das in diesem Ausführungsbeispiel von dem Kopfteil einer elektrischen Zahnbürste gebildet ist. Zwischen den beiden einander zugewandten Enden der Stangen 2, 3 befindet sich in senkrechter Position ein zylinderförmiger Übertragungshebel 4, der an einem Ende die Form einer Gabel 5 hat, die auf einen Stift 6 aufgesteckt ist.

Das andere Ende des Übertragungshebels 4 ist angeschrägt und geht in eine Kante 8 über, die mittels eines Filmscharniers 9 mit einem seitlich von der Antriebsstange abstehenden Fortsatz 10 verbunden ist.

Unterhalb der Gabel 5 befindet sich ein seitlich vom Übertragungshebel 4 abstehender Steg 11, der mittels eines weiteren Filmscharniers 12 mit einer kurzen Übertragungsstange 13 verbunden ist. Das andere Ende der Übertragungsstange 13 besitzt einen Kugelkopf 14, der in eine Kugelpfanne 15 am Ende der Abtriebsstange 3 eingesetzt bzw. eingeschnappt ist.

Seitlich an der Abtriebsstange 3 befinden sich zwei Kulissensteine 16, die in hier nicht dargestellte Kulissen im Gehäuse 19 geführt sind und der Abtriebsstange 3 auf Grund ihrer Längsbewegung gleichzeitig eine oszillierende Drehbewegung aufprägen.

Das Getriebe arbeitet wie folgt: Der Antriebsstange 2 wird durch einen hier nicht dargestellten Antrieb eine hin und her gehende Bewegung aufgeprägt. Diese überträgt sich mittels des Filmscharniers 9 auf den Übertragungshebel 4, der dabei eine Schwenkbewegung um den Stift 6 ausübt. Die Schwenkbewegung wird auf die Übertragungsstange 13 und damit auf die Abtriebsstange 3 übertragen, wobei ihr Hub kürzer ist als der der Antriebsstange 2, da die Übertragungsstange 13 mit einer kürzeren Hebelweglänge am Übertragungshebel angreift als die Antriebsstange 2.

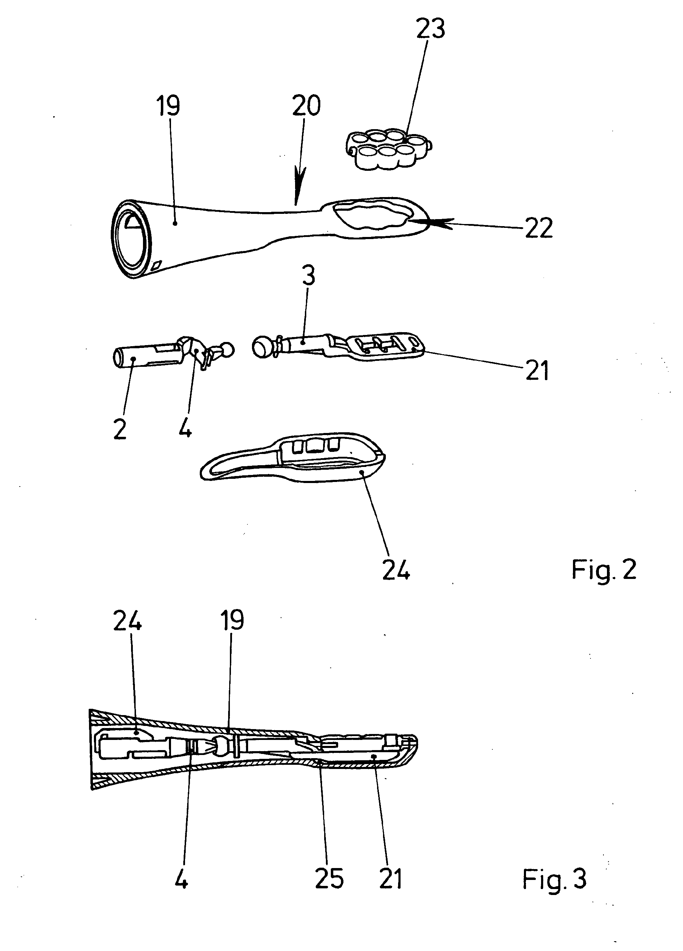

Figur 2 zeigt in einer Explosionsdarstellung das Kopfteil 20 einer elektrischen Zahnbürste. Dieses besteht aus dem schon erwähnten Gehäuse 19, in dem das zuvor beschriebene Getriebe 1 angeordnet ist. Die Abtriebsstange 3 weist einen Fortsatz in Form einer Platte 21 auf, die unter einer Öffnung 22 im Gehäuse 19 liegt, und an deren Oberseite ein Borstenbüschelträger 23 befestigt ist. Die Unterseite des Gehäuses 19 wird von einem schalenförmigen Deckel 24 geschlossen. Im Gehäuse 19 befinden sich, was in der Figur 3 zu erkennen ist, Führungen 25 für die Stangen 2, 3 sowie für die Platte 21.

Das Getriebe 1 ist in einem in das Kopfteil 20 einsetzbaren zweiteiligen Zylinder 30 untergebracht. Dieser besteht aus zwei zusammengesteckten Halbschalen 31a, 31b.

Der Zylinder 30 bildet sowohl eine Führung für die Antriebsstange 2 als auch für die Abtriebsstange 3. Außerdem ist an einem Ende eine Kulisse 33 für den als Querstange 34 ausgebildeten Kulissenstein 16 eingelassen.

Der Zylinder 30 besitzt zwei gegenüberliegende Öffnungen 35, 36 für den Übertragungshebel 4, die durch randoffene Ausnehmungen in den Rändern der Halbschalen 31a, 31b gebildet sind.

An einer Öffnung befinden sich Verdickungen 37, 38 mit gegenüberliegenden fluchtenden Sackbohrungen, in denen der Stift 6 für den Übertragungshebel 4 eingesteckt ist.

An der Außenseite des Zylinders 30 befinden sich noch Längsstege 39, die in entsprechenden Nuten im Kopfteil 20 eingeführt werden, so dass der Zylinder 30 dort drehgesichert liegt.

### Bezugszeichenliste

- 1: Getriebe
- 2: Antriebsstange
- 3: Abtriebsstange
- 4: Übertragungshebel
- 5: Gabel

- 6: Stift
- 8: Kante
- 9: Filmscharnier
- 10: Fortsatz

- 11: Steg
- 12: Filmscharnier
- 13: Übertragungsstange
- 14: Kugelkopf
- 15: Kugelpfanne

- 16: Kulissenstein
- 19: Gehäuse
- 20: Kopfteil

- 21: Platte
- 22: Öffnung
- 23: Borstenbüschelträger
- 24: Deckel
- 25: Führung

- 30: Zylinder
- 31a: Halbschale
- 31b: Halbschale
- 33: Kulisse

- 34: Querstange
- 35: Öffnung
- 36: Öffnung
- 37: Verdickung
- 38: Verdickung
- 39: Längsstege

## Patentansprüche

1. Hubübersetzungsgetriebe, insbesondere für eine elektrische Zahnbürste, um die oszillierende Hubbewegung einer Antriebsstange in eine oszillierende amplitudengeänderte Hubbewegung einer Abtriebsstange zu übersetzen, wobei zwischen den beiden Stangen ein um ein Schwenklager schwenkbarer Übertragungshebel angeordnet ist, an dem die beiden Stangen in unterschiedlichen Abständen zum Schwenklager des Übertragungshebels angreifen, **dadurch gekennzeichnet, dass** die Antriebsstange (2) mittels eines Scharniers (9) mit dem einen vom Schwenklager entfernten Ende des Übertragungshebels (4) verbunden ist und das andere Ende des Übertragungshebels verschiebbar im Schwenklager gehalten ist.

2. Getriebe nach Anspruch 1, **dadurch gekennzeichnet, dass** die Antriebsstange (2) an ihrem vorderen Ende einen seitlich abgesetzten Fortsatz (10) aufweist, an dem der Übertragungshebel (4) in einem Scharnier (9) schwenkbar befestigt ist.

3. Getriebe nach Anspruch 2, **dadurch gekennzeichnet, dass** das andere Ende des Übertragungshebels (4) einen Schlitz aufweist, durch den ein ortsfest zum Getriebe (1) angeordneter, die Schwenkachse des Übertragungshebels (4) bildender Stift (6) hindurchragt.

4. Getriebe nach Anspruch 3, **dadurch gekennzeichnet, dass** eine mit der Abtriebsstange (3) verbundene Übertragungsstange (13) mittels eines Scharniers (12) am Übertragungshebel (4) angelenkt ist.

5. Getriebe nach Anspruch 4, **dadurch gekennzeichnet, dass** die Übertragungsstange (13) mit der Abtriebsstange (3) mittels eines Kugelgelenks verbunden ist, und die Abtriebsstange (3) in eine schräg zur Längsachse der Abtriebsstange (3) verlaufende Kulisse geführt ist.

6. Getriebe nach einem der vorhergehenden Ansprüche, **dadurch gekennzeichnet, dass** wenigstens der Übertragungshebel (4), der Fortsatz (10) und die Übertragungsstange (13) aus einem Kunststoff gefertigt sind und die Scharniere (9, 12) als Filmscharniere ausgebildet sind.

7. Elektrische Zahnbürste mit einem einen Antrieb aufweisenden Handteil, an dessen Aufsteckende ein wenigstens eine axiale Hubbewegung ausführender Antriebszapfen herausragt, und einem auf das Aufsteckende des Handteils aufsteckbaren Kopfteil, in dem ein Borstenbüschel tragender Bürstenkopf so gelagert ist, dass er wenigstens eine in Längsrichtung des Kopfteils hin- und hergehende Hubbewegung auszuführen vermag, wozu der Bürstenkopf mit dem Antriebszapfen gekoppelt ist, wenn das Kopfteil auf dem Handteil aufgesteckt ist, **dadurch gekennzeichnet, dass** im Kopfteil in der Wirkverbindung zwischen dem Antriebszapfen und dem Bürstenkopf ein Hubübersetzungsgetriebe angeordnet ist, dessen Antriebsstange mit dem Antriebszapfen gekoppelt ist, und dass das Hubübersetzungsgetriebe insbesondere so eingerichtet ist, dass eine Hubuntersetzung erfolgt.

8. Zahnbürste nach Anspruch 7, **dadurch gekennzeichnet, dass** das Hubübersetzungsgetriebe nach einem der Ansprüche 1 bis 6 gestaltet ist.

9. Zahnbürste nach Anspruch 8, **dadurch gekennzeichnet, dass** die Abtriebsstange (3) mit einem Kopf versehen ist, der ein oder mehrere Borstenbüschel trägt.

10. Zahnbürste nach Anspruch 9, **dadurch gekennzeichnet, dass** das Kugelgelenk aus einem Kugelkopf (14) an der Übertragungsstange (13) und einer Kugelpfanne (15) an der Abtriebsstange (3) gebildet ist.
